# EUROPEAN PATENT SPECIFICATION

(11) **EP 3 589 446 B1**
(45) Date of publication and mention of the grant of the patent: **08.03.2023**
(21) Application number: 18709797.7
(22) Date of filing: 28.02.2018
(51) Int. Cl.: B23Q 5/04, B23Q 17/00

(54) **DEVICE FOR CONNECTING A TOOL TO A MACHINE**
VORRICHTUNG ZUM ANSCHLIESSEN EINES WERKZEUGS AN EINE MASCHINE
DISPOSITIF DESTINÉ À RELIER UN OUTIL À UNE MACHINE

(30) Priority: 02.03.2017 IT 201700023373
(43) Date of publication of application: 08.01.2020
(73) Proprietor: O.M.G. S.r.l., 42025 Cavriago (RE) (IT)
(72) Inventor: CATELLANI, Elia, 42025 Cavriago (RE) (IT)
(74) Representative: Ottazzo, Marco Francesco Agostino
(86) International application number: PCT/IB2018/051275
(87) International publication number: WO 2018/158701

(56) References cited:
- WO-A1-91/03345
- WO-A1-2015/145345
- DE-U1- 20 017 659

## Description

The present invention refers to a device for connecting a tool to a machine, in particular a tool-holder head type.

In particular, the invention refers to a head with a variable angle to be mounted on machine tools, with manual or automatic changing of the tools.

The tool-holder heads with variable angles are generally used for carrying out machining, the axis of which should not be one of the machine axes on which the head is mounted, nor should the machine perform the machining with its own axes. As indicated by their name, these heads allow the tools to rotate in respect to the longitudinal axis of the head itself, and at a pre-set angle that can be changed according to the need.

Known heads that comprise a body to which a tool-holder spindle is connected by means of an articulated connection device, are generally also provided with a display element, typically a screen, for displaying the inclination angle of the tool.

The display is normally integrated in the head body or in a separate body that is fastened to the head.

A problem associated with the known heads is the considerable footprint caused by the displays. For example, in models in which the display is integrated in the head, a casing is provided, that completely surrounds the head, inevitably increasing the dimensions and footprint.

Another problem of known heads lies in the difficulty of easily reading the value of the angle displayed on the screen, in particular, when the screen is orientated in a direction inclined in respect to the horizontal, or when it is completely overturned.

WO 2015/145345 A1 discloses a device according to the preamble of claim 1.

The aim of the present invention is therefore to achieve a device for connecting a tool to a machine which is provided with a display element and, at the same time, has a limited footprint.

Another aim of the present invention is to achieve a device for connecting a tool to a machine, which allows the display element to be easily read.

These and other aims are reached by achieving a device for connecting a tool to a machine, achieved according to the technical teachings of the enclosed claims.

The device according to the invention is defined in claim 1.

Further characteristics and advantages of the present invention will become clearer from the description of a preferred but not exclusive embodiment of the device, for connecting a tool to a machine, illustrated by way of example and therefore non-limitative in the enclosed drawings, wherein:

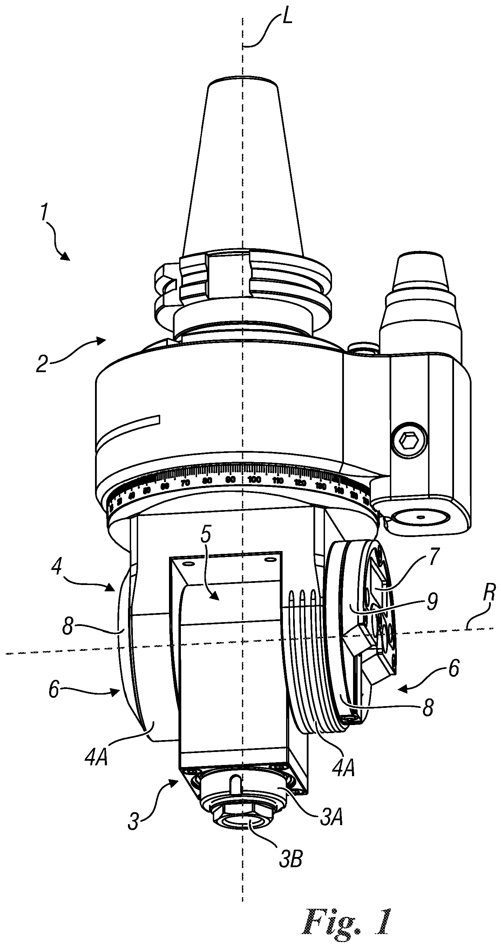

Figure 1 is a perspective view of the device according to the present invention.

With reference to the above figure, the aforementioned device for connecting a tool to a machine is indicated as a whole with the reference numeral 1.

The device 1 comprises an attachment body 2 for attaching the device 1 to the machine and, which develops along the longitudinal axis L, a tool holder body 3 adapted to support a tool (not shown) and an articulated connection member 4 that mutually connects the attachment body 2 and the tool holder body 3.

The articulated connection member 4 comprises at least one swivel joint 5 adapted to allow the rotation of the tool holder body 3 around a rotation axis R transversal (preferably orthogonal or perpendicular) to the longitudinal axis L, and therefore the inclination of the tool holder body 3 in respect to the same longitudinal axis L. The articulated connection member 4 has at least one lateral surface 6 transversal to the rotation axis R.

As can be seen in the figure, the tool holder body is typically a tool-holder spindle, provided with a free end 3A in which a seat 3B is arranged for fastening a tool (not shown), and the articulated connection member 4 provides a conventional fork, the legs 4A of which are appropriately perforated to allow the rotatable fastening of the tool-holder spindle 3 through an appropriate rod, in a known manner. Said rod forms the swivel joint 5 of the articulated connection member 4, in the illustrated example.

By the lateral surface 6 transversal to the axis R it is meant that, within the scope of the present invention, the external surface of the legs 4A which is inclined or more preferably perpendicular to the axis R, and which appropriately intersects the same axis R.

The device 1 also comprises an element for measuring and controlling (preferably an accelerometer with one or more axes, not shown in the figure) the rotation of the tool holder body 3, as well as a display element 7 for displaying the rotation angle of the tool holder body 3 in relation to the attachment body 2. The display elements 7 is electronically connected to the control and measurement rotation element of the tool holder body 3.

Preferably, the display element is provided with a display, or screen adapted to display a plurality of alphanumeric characters.

According to the invention, the display element 7 is arranged at the articulated connection member 4 and parallel to the lateral surface 6. In this manner the footprint is limited due to the display being provided on the articulated connection member 4, and, having the display parallel to the lateral surface 6 allows the display to be easily read.

Preferably, the display element 7 is arranged right at the lateral surface 6 of the articulated connection member 4. It can be envisaged that the display 7 is arranged only partially on the lateral surface 6, but it is preferable that the screen is arranged completely on the lateral surface 6, i.e. that it is not protruding from the surface, in order to furthermore limit the footprint.

Another advantage obtained from this characteristic lies in the fact that the display element does not interfere with the movement of the tool holder body 3 and therefore it does not limit the rotation amplitude, which in the present case is greater than +/- 60°, preferably greater than +/-90°, even more preferably greater than +/- 120° in respect to the longitudinal axis L of the attachment body 2.

In the illustrated example the display element 7 is connected to the tool holder body 3, so that the orientation of the display element 7 follows the orientation of the tool holder body 3. This allows an even easier reading of the value of the inclination angle of the tool holder body 3.

More precisely the articulated connection member 4 provides at least a lateral element 8 arranged on the lateral surface 6 of the articulated connection member 4 and connected to the tool holder body 3 through the swivel joint 5. In the present invention, the display element 7 is fastened to the aforementioned lateral element 8.

Said lateral element 8 is a plate (as illustrated in the figure) in order to optimise the volume of device 1. It is advantageous to provide for the plate to be disc shaped, even more preferably, that it is centred on the rotation axis R of the tool holder body 3. It is obviously appropriate that the lateral dimensions of the lateral element 8 are smaller than the lateral dimensions of the lateral surface 6 of the articulated connection member 4.

It is particularly advantageous that the display element 7 is arranged at the lateral element 8, more preferably entirely arranged on the lateral element 8.

In the illustrated example, the device 1 for connecting a tool to a machine comprises a display device 9 which has a plate-like shape, and on which, the display element 7 is provided. It is preferable that the display device 9, that appropriately comprises an electronic circuit that enables the functioning of the display 7 as well as the accelerometer described above, is at least partially disk shaped, and more preferably with similar dimensions to the lateral element 8 described above. In the illustrated example the display device 9 is substantially semi-disc shaped.

It must also be said that in the example illustrated the display device 9 and the lateral element 8, on which it is provided, are made in a single piece, but the aim of the invention is achieved even if these two elements are separate pieces and mutually connected.

The electronic circuit, which forms part of the display 7, is preferably powered by means of a battery.

The display device 9 can be omitted, and the display 7 (together with the relative electronic circuit and accelerometer) can be directly integrated into the articulated connection member 4, or in the lateral element 8.

It should also be noted that the articulated connection member 4 can be fastened in a rotatable manner to the attachment body 2, thus being able to rotate around the longitudinal axis L of the attachment body 2.

The operation of the present invention is as follows.

The device 1 is firstly mounted on a tool holder machine, and then a tool chosen according to the need, is mounted on the device 1.

The positioning of the tool can be manually adjusted on the tool holder body 3 in order to cause it to rotate around the rotation axis R, and possibly, also around the longitudinal axis L.

While the tool holder body 3 is rotating, the accelerometer measures its angle and communicates it to the display device 9, which then displays it on the screen 7. At the same time, the same screen 7 rotates together with the tool holder body 3.

Once the desired inclination is achieved it is possible to proceed with the normal use of the tool.

## Claims

1. A device (1) for connecting a tool to a machine, said device (1) comprising;
- an attachment body (2) for attaching said device (1) to said machine, and which develops along a longitudinal axis (L);
- a tool holder body (3) adapted to support a tool;
- an articulated connection member (4) that mutually connects said attachment body (2) and said tool holder body (3), and which comprises at least one swivel joint (5) adapted to allow the rotation of said tool holder body (3) around a rotation axis (R) transversal to said longitudinal axis (L), said articulated connection member (4) having at least one lateral surface (6) transversal to said rotation axis (R);
- a control and measurement rotation element of said tool holder body (3); and a display element (7) for displaying the rotation angle of said tool holder body (3) in relation to said attachment body (2), said display element (7) being electronically connected to said control and measurement rotation element and also, being arranged at said articulated connection member (4) and parallel to said lateral surface (6);
said device being **characterised in that** said display element (7) is connected to the tool holder body (3), in such a manner that the orientation of the display element (7) follows the orientation of the tool holder body (3), and **in that** the articulated connection member (4) comprises at least one plate shaped lateral element (8), arranged on the lateral surface (6) and connected to the tool holder body (3) through the swivel joint (5), the display element (7) being fastened to said plate shaped lateral element (8).

2. The device (1) according to claim 1, **characterised in that** the plate shaped lateral element (8) is disc-like shaped.

3. The device (1) according to one or more of the previous claims, **characterised in that** it comprises a display device (9) having a plate shape and connected to the control and measurement rotation element of the tool holder body (3), the display element (7) being provided on said display device (9).

4. The device (1) according to claim 3, **characterised in that** the display device (9) is at least partially a disk shaped.

5. The device (1) according to claim 4, **characterised in that** the display device (9) is substantially semi-disk shaped.

## Patentansprüche

1. Vorrichtung (1) zum Verbinden eines Werkzeugs mit einer Maschine, wobei die Vorrichtung (1) Folgendes umfasst:
- ein Anbringungshauptteil (2) zum Anbringen der Vorrichtung (1) an der Maschine, das sich entlang einer Längsachse (L) erstreckt,
- ein Werkzeughalterhauptteil (3), das dafür eingerichtet ist, ein Werkzeug zu tragen,
- ein gelenkiges Verbindungselement (4), welches das Anbringungshauptteil (2) und das Werkzeughalterhauptteil (3) miteinander verbindet und das mindestens ein Drehgelenk (5) umfasst, das dafür eingerichtet ist, die Rotation des Werkzeughalterhauptteils (3) um eine Rotationsachse (R) zu ermöglichen, die transversal zur Längsachse (L) liegt, wobei das gelenkige Verbindungselement (4) mindestens eine Seitenfläche (6) aufweist, die transversal zu der Rotationsachse (R) liegt,
- ein Steuer- und Messrotationselement des Werkzeughalterhauptteils (3) und ein Anzeigeelement (7) zum Anzeigen des Rotationswinkels des Werkzeughalterhauptteils (3) im Verhältnis zu dem Anbringungshauptteil (2), wobei das Anzeigeelement (7) elektronisch mit dem Steuer- und Messrotationselement verbunden ist und außerdem an dem gelenkigen Verbindungselement (4) und parallel zu der Seitenfläche (6) angeordnet ist,
wobei die Vorrichtung **dadurch gekennzeichnet ist, dass** das Anzeigeelement (7) derart mit dem Werkzeughalterhauptteil (3) verbunden ist, dass die Ausrichtung des Anzeigeelements (7) der Ausrichtung des Werkzeughalterhauptteils (3) folgt, und **dadurch, dass** das gelenkige Verbindungselement (4) mindestens ein plattenförmiges Seitenelement (8) umfasst, das an der Seitenfläche (6) angeordnet und durch das Drehgelenk (5) mit dem Werkzeughalterhauptteil (3) verbunden ist, wobei das Anzeigeelement (7) an dem plattenförmigen Seitenelement (8) befestigt ist.

2. Vorrichtung (1) nach Anspruch 1, **dadurch gekennzeichnet, dass** das plattenförmige Seitenelement (8) scheibenförmig ist.

3. Vorrichtung (1) nach einem oder mehreren der vorhergehenden Ansprüche, **dadurch gekennzeichnet, dass** sie eine Anzeigevorrichtung (9) umfasst, die eine Plattenform aufweist und mit dem Steuer- und Messrotationselement des Werkzeughalterhauptteils (3) verbunden ist, wobei das Anzeigeelement (7) auf der Anzeigevorrichtung (9) bereitgestellt ist.

4. Vorrichtung (1) nach Anspruch 3, **dadurch gekennzeichnet, dass** die Anzeigevorrichtung (9) zumindest teilweise scheibenförmig ist.

5. Vorrichtung (1) nach Anspruch 4, **dadurch gekennzeichnet, dass** die Anzeigevorrichtung (9) im Wesentlichen halbscheibenförmig ist.

## Revendications

1. Dispositif (1) permettant de connecter un outil à une machine, ledit dispositif (1) comprenant ;
- un corps de fixation (2) permettant de fixer ledit dispositif (1) à ladite machine, et qui se déploie le long d'un axe longitudinal (L) ;
- un corps de porte-outil (3) adapté pour soutenir un outil ;
- un élément de connexion articulé (4) reliant mutuellement ledit corps de fixation (2) et ledit corps de porte-outil (3), et comprenant au moins un joint pivotant (5) adapté pour permettre la rotation dudit corps de porte-outil (3) autour d'un axe de rotation (R) transversal audit axe longitudinal (L), ledit élément de connexion articulé (4) ayant au moins une surface latérale (6) transversale audit axe de rotation (R) ;
- un élément de rotation de commande et de mesure dudit corps de porte-outil (3) ; et un élément d'affichage (7) pour afficher l'angle de rotation dudit corps de porte-outil (3) par rapport audit corps de fixation (2), ledit élément d'affichage (7) étant connecté de manière électronique audit élément de rotation de commande et de mesure et étant également disposé au niveau dudit élément de connexion articulé (4) et parallèle à ladite surface latérale (6) ;
ledit dispositif étant **caractérisé en ce que** ledit élément d'affichage (7) est connecté au corps de porte-outil (3), de telle manière que l'orientation de l'élément d'affichage (7) suit l'orientation du corps de porte-outil (3), et **en ce que** l'élément de connexion articulé (4) comprend au moins un élément latéral en forme de plaque (8), disposé sur la surface latérale (6) et connecté au corps de porte-outil (3) par l'intermédiaire du joint pivotant (5), l'élément d'affichage (7) étant fixé audit élément latéral en forme de plaque (8).

2. Dispositif (1) selon la revendication 1, **caractérisé en ce que** l'élément latéral en forme de plaque (8) a une forme de disque.

3. Dispositif (1) selon une ou plusieurs des revendications précédentes, **caractérisé en ce qu'**il comprend un dispositif d'affichage (9) ayant une forme de plaque et relié à l'élément de rotation de commande et de mesure du corps de porte-outil (3), l'élément d'affichage (7) étant prévu sur ledit dispositif d'affichage (9).

4. Dispositif (1) selon la revendication 3, **caractérisé en ce que** le dispositif d'affichage (9) est au moins partiellement en forme de disque.

5. Dispositif selon la revendication 4, **caractérisé en ce que** le dispositif d'affichage (9) est sensiblement en forme de demi-disque.
